# EUROPEAN PATENT SPECIFICATION

(11) **EP 2 562 142 B1**
(45) Date of publication and mention of the grant of the patent: **02.01.2019**
(21) Application number: 11771558.1
(22) Date of filing: 15.04.2011
(51) Int. Cl.: C03C 3/066, C03C 3/068

(54) **OPTICAL GLASS AND OPTICAL ELEMENT**
OPTISCHES GLAS UND OPTISCHES ELEMENT
VERRE OPTIQUE ET ÉLÉMENT OPTIQUE

(30) Priority: 19.04.2010 CN 201010151999
(43) Date of publication of application: 27.02.2013
(73) Proprietor: Cdgm Glass Co., Ltd., Chengdu, Sichuan 610100 (CN)
(72) Inventor: SUN, Wei, Chengdu, Sichuan 610100 (CN)
(74) Representative: Gulde & Partner
(86) International application number: PCT/CN2011/072840
(87) International publication number: WO 2011/131105

(56) References cited:
- EP-A1- 1 533 285
- CN-A- 101 163 648
- CN-A- 101 282 915
- CN-A- 101 805 120
- JP-A- 2001 130 924
- US-A1- 2009 088 310
- DATABASE WPI Week 200634 Thomson Scientific, London, GB; AN 2006-324929 XP002725107, -& JP 2006 117502 A (OHARA KK) 11 May 2006 (2006-05-11)
- DATABASE WPI Week 200750 Thomson Scientific, London, GB; AN 2007-513563 XP002725108, & WO 2007/043262 A1 (OHARA KK) 19 April 2007 (2007-04-19)

## Description

### Field of the Invention

The invention relates to a technical field of glass, more specifically, an optical glass and an optical element.

### Background of the Invention

In recent years, digital cameras, digital video cameras and camera-enabled mobiles are increasingly popular, and then the equipment used for the optical system is improved in integrated level and adding functions, which needs an optical system with higher accuracy, lighter weight and smaller size. Therefore, not only an aspherical mirror is widely used but also it has become a main trend to use an aspherical element in optical design.

A precision mould pressing technology is widely used to manufacture aspherical lens. The precision mould pressing means that a prefabricated glass component is pressed and formed a glass product in the shape of or in close proximity to a final product shape and with optically functional surfaces by a high precision mould with predetermined product shape at a given temperature and pressure. No burnishing by abrasion is required for the aspherical lens made by the precision mould pressing technology, thus the working procedure are simplified.

The optical glass for the aspherical lens is required to have high refractive index and low dispersive index, and is more widely used for the modern imaging device. For example, Chinese patent CN101360691A disclosed an optical glass with optical constant including refractive index of 1.5-1.65 and Abbe number of 50-65. Chinese patent CN1704369A disclosed optical glass with optical constant including refractive index of 1.85-1.90 and Abbe number of 40-42.

The refractive index has a significant impact on the light transmittance of the optical glass, and the higher the refractive index is, the lower the light transmittance is. Fox example, Chinese patent CN101492247A disclosed an optical glass with refractive index of 1.8-2.1, wherein, the corresponding wavelength is more than 400nm when the transmittance is 80%.

During precision compression molding, it is required to make a prefabricated glass body by pressure forming at about the temperature of the softening point of the glass to duplicate high precision modular surface on the glass moldings. In this case, a forming die is exposed at high temperature, and under a higher pressure, and then the surface film of the forming die is easy to be oxidized and corroded even if it is in protective gas. Therefore, the glass is required to be at a lower transformation temperature. In prior arts, Chinese patent 1704369A disclosed an optical glass with optical constant including refractive index of 1.83-1.9, Abbe number of 40-42 and transformation temperature of 670-720°C. Due to higher transformation temperature of the glass material, higher temperature is required during precision compression molding, and the formed die is easy to be damaged, thus resulting in a higher cost.

EP 1533285 A1 discloses an optical glass having a composition which comprises Si 0.1 - 6 mol %, B 12 - 32 mol %, La 2 - 12 mol %, Gd 0.2 - 8mol%, Li 0.1 - 6.5 mol %, O 40 - 65 mol %, Y 0 - 1 mol %, Yb 0 - 6 mol %, Ge 0 - 3.5 mol %, Ti 0 - 2 mol %, Zr 0 - 3 mol%, Nb 0 - 1 mol %, Ta 0 - 1.5 mol %, W 0 - 1,5 mol %, Zn 0 - 6 mol %, Ca 0 - 6 mol %, Sr 0 - 4 mol %, Ba 0 - 3 mol %, Sb 0 - 0.2 mol %, and F 0.1 - 20 mol % being substantially free of As.

### Summary of the Invention

The invention provides an optical glass comprising or consisting of:
0.1 wt%-8wt% of SiO₂;
20 wt%-32 wt % of B₂O₃;
20wt%-35 wt % of La₂O₃;
15wt%-30wt% of Gd₂O₃;
1 wt%-6 wt % of Ta₂O₅;
1 wt%-15wt % of ZnO;
0.1wt%-2wt% of Li₂O;
0-8wt % of ZrO₂, 0-5wt% of Nb₂O₅, 0-5wt% of Y₂O₃, 0-5wt% of Yb₂O₃, BaO, CaO, SrO, Na₂O, K₂O and 0-0.5wt% of Sb₂O₃, wherein, the total content of BaO, CaO and SrO is 0.5-15wt%, and the total content of Na₂O and K₂O is 0.1-2wt%.

Preferably, the optical glass comprises:
1 wt%∼10wt% of BaO, CaO and SrO in total content; and
0.1wt%∼1wt% of Na₂O and K₂O in total content.

Preferably, the optical glass comprises:
1wt%-7wt% of ZrO₂.

Preferably, the optical glass comprises:
22 wt%-32wt% of B₂O₃.

Preferably, the optical glass comprises:
25wt%-35wt% of La₂O₃.

Preferably, the optical glass comprises:
18wt%-25wt% of Gd₂O₃.

Preferably, the optical glass comprises:
2wt%-5wt% of Ta₂O₅.

Preferably, the optical glass comprises:
0.3 wt%-1.5wt% of Li₂O.

The invention further provides an optical element composed of the optical glass according to the above technical art.

The invention provides an optical glass and an optical element. SiO₂ is available to resist against the devitrification in the glass and to be used as a grid component of the glass. As oxide, B₂O₃ is available to improve the heat stability and chemical stability of the glass and reduce the softening temperature and kinetic viscosity of the glass. La₂O₃ and Gd₂O₃ are the necessary compositions for getting the glass with high refractive index and low dispersive index. Ta₂O₅ is the component for providing high refractive index and low dispersive index of the glass and is available to effectively reinforce the stability of the glass. ZnO is the component for providing high refractive index and low dispersive index of the glass. Li₂O, a stronger cosolvent is available to reduce the softening temperature of the glass. An experimental result shows that such optical glass has a refractive index of 1.79125, Abbe number of 50.06 and transformation temperature of 590°C, and when transmittance is 80%, the corresponding wavelength is 384nm.

### Detailed Description of the Embodiments

Clear and complete description for the technical art used in embodiments according to the invention will be made as follows. It is obvious that the embodiments provided herein are only some embodiments according to the invention but not all embodiments. All other embodiments obtained by the common technician of the field without creative work based on the embodiments provided herein will fall into the protective scope of the invention.

The invention provides an optical glass comprising or consisting of the following compositions:
0.1 wt%-8wt% of SiO₂;
20 wt%-32 wt % of B₂O₃;
20wt%-35 wt % of La₂O₃;
15wt%-30wt% of Gd₂O₃;
1 wt%-6 wt % of Ta₂O₅;
1 wt%-15wt % of ZnO;
0.1wt%-2wt% of Li₂O;
0-8wt % of ZrO₂;
0-5wt% of Nb₂O₅;
0-5wt% of Y₂O₃;
0-5wt% of Yb₂O₃;
0-0.5wt% of Sb₂O₃;
BaO, CaO and SrO, wherein a total content of BaO, CaO and SrO is 0.5wt%-15wt%; and
Na₂O and K₂O, wherein a total content of Na₂O and K₂O is 0.1-2wt%.

SiO₂ is an important oxide for manufacturing the glass and forms irregular continuous network through the structural unit of silica tetrahedron [SiO₄] which is a skeleton for the optical glass. SiO₂ has the function to resist against the devitrification in the glass. When SiO₂ content is more than 8wt%, the optical glass is reduced in meltability and is increased in softening temperature. The SiO₂ content is limited to be 0.1 wt%∼8wt%, preferably 0.5 wt% -6wt%, more preferably 2.5wt%-5wt%.

B₂O₃ is an important oxide for manufacturing the optical glass, effective to form the grid of the optical glass, available to reduce the expansion coefficient of the glass and improve the heat stability and chemical stability of the glass and also increase the refractive index of the glass and reduce the transformation temperature and fusible temperature. B₂O₃ content is limited to be 20 wt%-32 wt %. When the B₂O₃ content is less than 20 wt%, the transformation temperature rises and the refractive index reduces; when the B₂O₃ content is more than 32wt%, the low dispersibility of the optical glass will be damaged. The B₂O₃ content is preferably 22 wt%-32wt% and more preferably 25 wt%-29wt%.

La₂O₃ is a necessary component for providing high refractive index and low dispersive index of the glass. La₂O₃ content is limited to be 20wt%-35 wt %. The optical glass is reduced in the refractive index when the La₂O₃ content is less than 20wt%, and is reduced in resisting against the devitrification when the La₂O₃ content is more than 35 wt%. The La₂O₃ content is preferably 25wt%-35wt%.

Gd₂O₃ is an effective component for improving refractive index of the glass and increasing Abbe number. Gd₂O₃ content is limited to be 15wt%-30wt%. The optical glass is reduced in resisting against the devitrification when the Gd₂O₃ content is more than 30wt%. The Gd₂O₃ content is preferably 18wt%-25wt%.

Ta₂O₅ is a component for providing high refractive index and low dispersive index of the glass and available to effectively reinforce the stability of the glass. When Ta₂O₅ content is more than 6wt%, the optical glass is reduced in the meltability and increased in the transformation temperature. The Ta₂O₅ content is limited to be 1 wt%-6 wt % and preferably 2wt%-5wt%.

ZnO is an important component for manufacturing the optical glass and low melting point glass. ZnO can reduce coefficient of thermal expansion and improve the chemical stability, heat stability and refractive index of the glass. ZnO content is limited to be 1 wt%-15wt %; the optical glass is increased in resisting against the devitrification when the ZnO content is more than 15wt% and increased in the transformation temperature when the ZnO content is less than 1wt%. The ZnO content is preferably 5wt%-12wt% and more preferably 8wt%-12wt%.

Li₂O is a stronger cosolvent and available to reduce the softening temperature of the glass. Li₂O content is limited to be 0.1wt%-2wt%. The optical glass is reduced in resisting against the devitrification and the refractive index, and then aggravated in crystallization and devitrification when the Li₂O content is more than 2wt%. The transformation temperature and the softening temperature can not be reduced when the Li₂O content is less than 0.1wt%. The Li₂O content is preferably 0.3 wt%-1.5wt%.

The optical glass, according to this invention, also comprises 0-8wt % of ZrO₂, 0-5wt% of Nb₂O₅, 0-5wt% of Y₂O₃, 0-5wt% of Yb₂O₃, BaO, CaO, SrO, Na₂O, K₂O and 0-0.5wt% of Sb₂O₃, wherein, the total content of BaO, CaO and SrO is 0.5-15wt%, and the total content of Na₂O and K₂O is 0.1-2wt%.

ZrO₂ can improve the viscosity, hardness, elasticity, refractive index and chemical stability of the optical glass and reduce the coefficient of thermal expansion of the glass. When ZrO₂ content is more than 8wt%, crystallization happens and the glass is reduced in resisting against devitrification and the transformation temperature. The ZrO₂ content may be 1wt%-7wt%.

Nb₂O₅ is a component for providing high refractive index of the glass and improving the devitrification resistance of the glass. When Nb₂O₅ content is more than 5wt%, the dispersive index is greatly raised, Abbe number is reduced and the transmissivity of the glass at a short wave is reduced. The Nb₂O₅ content may be 0.5wt%-5wt%.

Y₂O₃ and Yb₂O₃ may improve the refractive index of the optical glass. Y₂O₃ is the component for adjusting the optical constant of the glass. When Y₂O₃ content is more than 5wt%, the glass is deteriorated in the devitrification resistance. The function of Yb₂O₃ is similar to that of Y₂O₃ in the optical glass. When Yb₂O₃ content is more than 5wt%, the optical glass is easy to be devitrified. The Y₂O₃ content may be 0.1 wt%-5wt% or 0.5wt%-4wt% and the Yb₂O₃ content may be 0.1 wt%-5wt% or 0.5wt%-4wt%.

BaO has the functions of reducing the dispersion of the glass, improving the transmissivity of the glass and increasing the refractive index, density, gloss, and chemical stability of the optical glass. CaO is similar to BaO in the effect in the glass, and SrO is similar to BaO and CaO. Replacement of some BaO with SrO may quicken the melting and clarification of the glass, reduce the crystallization of the glass, increase the refractive index of the optical glass, and improve the devitrification resistance of the glass. The total content of BaO, CaO and SrO is 0.5 wt%-15wt% or may be 1wt%-10wt%.

Na₂O and K₂O may reduce the transformation temperature of the glass. When total content of Na₂O and K₂O is more than 2wt%, the optical glass is reduced in the devitrification resistance and the refractive index. The total content of Na₂O and K₂O is 0.1 wt%-2wt%, or may be 0.1 wt%-1wt%.

Sb₂O₃ may effectively reduce the temperature for clarification of the glass and improve the refractive index of the glass. Sb₂O₃ content may be 0.01wt%-0.5wt%.

The invention further provides an optical element composed of the optical glass provided herein. The optical element according to the invention is composed of the optical glass according to the invention, thus the optical element has various characteristics of the above optical glass. The optical element according to the invention is applicable for the digital cameras, the digital video cameras and the camera-enabled mobiles, etc.

The preferable embodiments in the invention is described below through detailed embodiments to further understand the technical solution of the invention, but it should be understood that these embodiments are only used for further description of the characteristics and advantages of the invention, instead of limiting the claims of the invention.

### Embodiment 1 (not covered by the present invention)

The optical glass comprises 3.5wt% of SiO₂, 27.9wt % of B₂O₃, 32.6wt % of La₂O₃, 21.9wt% of Gd₂O₃, 1.6 wt % of Ta₂O₅, 12.2 wt % of ZnO, and 0.3wt% of Li₂O. Main performance parameters are given below"
Refractive index: nd=1.76821
Abbe number: vd=49.31
Transformation temperature: Tg=605°C
Softening temperature: Ts=648°C
λ₈₀: 382.9nm

The above performance parameters are tested with the following methods:
Annealing value in the case of refractive index (nd) of (-2°C /h)-(-6°C /h), refractive index and the Abbe number are tested in accordance with GB/T 7962.1-1987 *Colorless Optical Glass Test Methods: Refractive Index and Abbe Number.*

The transformation temperature (Tg) is tested in accordance with GB/T7962.16-1987 *Colorless Optical Glass Test Methods: Linear Thermal Expansion Coefficient, Transformation Temperature and Sagging Temperature,* i.e. the temperature corresponding to the point of intersection between the extended straight lines in a low-temperature area and a high-temperature area on the expansion curve of the tested sample during each temperature rise of 1°C within a certain temperature range.

The glass is prepared into 10mm±0.1 mm thick sample, the wavelength λ₈₀ corresponding when the transmittance of the glass is 80% is tested.

Tables 1 and Table 2 show the component content and corresponding performance of the optical glass according to Embodiments 2-13, wherein Embodiments 2 - 12 are not covered by the present invention. Table 3 shows the component content and corresponding performance of the optical glass according to comparative embodiments 1-3.

**Table 1 Component content and corresponding performance of the optical glass according to Embodiments 2-7**

| | | Embodiment | | | | | |
|---|---|---|---|---|---|---|---|
| | | 2 | 3 | 4 | 5 | 6 | 7 |
| Glass component (wt%) | SiO₂ | 2.5 | 5 | 3 | 3.5 | 4.8 | 2 |
| | B₂O₃ | 28.5 | 28.8 | 27.1 | 28.5 | 27.8 | 29.2 |
| | La₂O₃ | 29.5 | 29.5 | 29.9 | 28.7 | 30.1 | 26 |
| | Gd₂O₃ | 20.3 | 21.5 | 20.5 | 23.1 | 20.3 | 23 |
| | ZnO | 10.2 | 10.2 | 10 | 10.2 | 11.8 | 9.4 |
| | Li₂O | 0.8 | 0.8 | 1 | 0.6 | 1 | 1.4 |
| | Ta₂O₅ | 3.1 | 4.2 | 3.5 | 2.5 | 4.2 | 3.5 |
| | ZrO₂ | 5.1 | | 5 | 2.9 | | 5.5 |
| | Total | 100 | 100 | 100 | 100 | 100 | 100 |
| | nd | 1.76547 | 1.76825 | 1.76760 | 1.76852 | 1.77325 | 1.78125 |
| | vd | 49.51 | 49.09 | 48.65 | 49.25 | 49.7 | 49.06 |
| | Tg (°C) | 603 | 605 | 609 | 606 | 608 | 596 |
| | λ₈₀(nm) | 384nm | 380nm | 379nm | 386nm | 378nm | 388nm |

**Table 2 Component content and corresponding performance of the optical glass according to Embodiments 8-13**

| | | Embodiment | | | | | |
|---|---|---|---|---|---|---|---|
| | | 8 | 9 | 10 | 11 | 12 | 13 |
| | SiO₂ | 8 | 6 | 3.2 | 4.5 | 7 | 2 |
| | B₂O₃ | 31 | 29 | 27 | 22.9 | 24 | 30 |
| | La₂O₃ | 24.5 | 30 | 25 | 34 | 27.3 | 27 |
| | Gd₂O₃ | 20 | 19 | 28 | 17 | 24 | 18 |
| | ZnO | 8 | 7 | 8 | 5 | 2 | 4 |
| | Li₂O | 0.5 | 1 | 0.8 | 0.6 | 0.7 | 1.55 |
| | ZrO₂ | 8 | 5 | | 6 | 5 | 4 |
| | Ta₂O₅ | | 3 | 5 | | 2 | 3 |
| | Nb₂O₅ | | | 3 | 4 | 1 | 2 |
| | Y₂O₃ | | | | 3 | 2 | 2 |
| Glass component (wt%) | Yb₂O₃ | | | | 3 | 2 | 2 |
| | BaO | | | | | 1 | 1.2 |
| | CaO | | | | | 1 | 1.2 |
| | SrO | | | | | 1 | 1.2 |
| | Na₂O | | | | | | 0.4 |
| | K₂O | | | | | | 0.4 |
| | Sb₂O₃ | | | | | | 0.05 |
| | Total | 100 | 100 | 100 | 100 | 100 | 100 |
| | nd | 1.75438 | 1.777682 | 1.78625 | 1.76782 | 1.77325 | 1.79125 |
| | vd | 46.51 | 49.09 | 50.65 | 49.25 | 47.7 | 50.06 |
| | Tg (°C) | 603 | 605 | 609 | 606 | 608 | 590 |
| | λ₈₀(nm) | 387nm | 386nm | 379nm | 388nm | 382nm | 384nm |

**Table 3 Component content and corresponding performance of the optical glass according to comparative embodiments 1-3**

| | | Comparative embodiments | | |
|---|---|---|---|---|
| | | 1 | 2 | 3 |
| | SiO₂ | 13 | 5 | 7.3 |
| Glass compon ent (wt%) | B₂O₃ | 17 | 41.4 | 31.1 |
| | La₂O₃ | 33.7 | 17.5 | 34.9 |
| | Gd₂O₃ | 25.3 | 23.5 | 25.5 |
| | ZnO | 10.2 | 11.8 | 0.2 |
| | Li₂O | 0.8 | 0.8 | 1 |
| | Total | 100 | 100 | 100 |
| | nd | 1.62124 | 1.60235 | 1.70123 |
| | vd | 43.51 | 48.01 | 46.37 |
| | Tg (°C) | 732 | 622 | 712 |
| | λ₈₀(nm) | 395nm | 396nm | 391nm |

No special limitation is imposed to the preparation method for the optical glass according to the invention, and the optical glass may be prepared by use of the method known to the technician of the field. The raw materials are cooled after melting, clarification and homogenization, and injected into the preheated metal die, and the optical glass is obtained after annealing.

The optical glass according to the embodiments 1-13 and comparative embodiments 1-3 of the invention is prepared with the following processes:
Measure quartz sand, boric acid, lanthana, gadolinium oxide, zinc oxide, zirconium oxide, lithium carbonate and tantalum oxide in proportion, put them into a platinum crucible after fully mixing, and cool after melting at 1080-1380°C, clarification and homogenization.

Inject the melted glass into the preheated metal die at about 550-600°C.

Put the preheated metal die with the melted glass into an annealing furnace for annealing to obtain the optical glass, and test the relevant parameters of the optical glass. The optical glass according to the embodiments 1-13 is not crystallized and devitrified during profiling.

Table 1 and Table 2 show the refractive index, Abbe number, transformation temperature and transmittance of the optical glass according to the embodiments 2-13, and Table 3 shows the refractive index, Abbe number, transformation temperature and transmittance of the optical glass according to the comparative embodiments 1-3.

It can be seen from the above embodiments that the optical glass and optical element according to the embodiments of the invention have refractive index of 1.75-1.8, Abbe number of 45-52 and transformation temperature of less than 610°C, and when transmittance is 80%, the corresponding wavelength is less than 390nm, and thus meeting the requirement of a modern imaging device.

## Claims

1. Optical glass, **characterized in that** it comprises or consist of:
0.1 wt%∼8wt%SiO₂;
20 wt%∼32 wt %B₂O₃;
20wt%∼35 wt %La₂O₃;
15wt%∼30wt%Gd₂O₃;
1 wt%∼6wt %Ta₂O₅;
1 wt%∼15wt %ZnO;
0.1wt%-2wt% of Li₂O;
0-8wt % of ZrO₂;
0-5wt% of Nb₂O₅;
0-5wt% of Y₂O₃;
0-5wt% of Yb₂O₃;
0-0.5wt% of Sb₂O₃;
BaO, CaO and SrO, wherein a total content of BaO, CaO and SrO is 0.5wt%-15wt%; and Na₂O and K₂O, wherein a total content of Na₂O and K₂O is 0.1-2wt%.

2. Optical glass according to Claim 1, **characterized in that** it comprises:
0.1wt%-5wt% of Y₂O₃.

3. Optical glass according to Claim 1, **characterized in that** it comprises:
1 wt%-10wt% of BaO, CaO and SrO in total content; and
0.1wt%-1wt% of Na₂O and K₂O in total content.

4. Optical glass according to Claim 1, **characterized in that** it comprises: 1wt%-7wt% of ZrO₂.

5. Optical glass according to Claim 1, **characterized in that** it comprises:
0.1wt%-5wt% of Yb₂O₃.

6. Optical glass according to Claim 1, **characterized in that** it comprises:
22 wt%-32wt% of B₂O₃.

7. Optical glass according to Claim 1, **characterized in that** it comprises:
25wt%-35wt% of La₂O₃.

8. Optical glass according to Claim 1, **characterized in that** it comprises:
18wt%-25wt% of Gd₂O₃.

9. Optical glass according to Claim 1, **characterized in that** it comprises:
2wt%-5wt% of Ta₂O₅.

10. Optical glass according to Claim 1, **characterized in that** it comprises:
0.5wt%-5wt% of Nb₂O₅.

11. Optical glass according to Claim 1, **characterized in that** it comprises:
0.3 wt%-1.5wt% of Li₂O.

12. An optical element composed of the optical glass according to one of the preceding claims.

## Patentansprüche

1. Optisches Glas, **dadurch gekennzeichnet, dass** es umfasst oder besteht aus:
0,1 Gew.-% bis ungefähr 8 Gew.-% SiO₂;
20 Gew.-% bis ungefähr 32 Gew.-% B₂O₃;
20 Gew.-% bis ungefähr 35 Gew.-% La₂O₃;
15 Gew.-% bis ungefähr 30 Gew.-% Gd₂O₃;
1 Gew.-% bis ungefähr 6 Gew.-% Ta₂O₅;
1 Gew.-% bis ungefähr 15 Gew.-% ZnO;
0,1 Gew.-% bis ungefähr 2 Gew.-% Li₂O;
0 bis 8 Gew.-% ZrO₂;
0 bis 5 Gew.-% Nb₂O₅;
0 bis 5 Gew.-% Y₂O₃;
0 bis 5 Gew.-% Yb₂O₃;
0 bis 0,5 Gew.-% Sb₂O₃;
BaO, CaO und SrO, wobei ein Gesamtgehalt von BaO, CaO und SrO 0,5 Gew.-% bis 15 Gew.-% beträgt; und
Na₂O und K₂O, wobei ein Gesamtgehalt von Na₂O und K₂O 0,1 bis 2 Gew.-% beträgt.

2. Optisches Glas nach Anspruch 1, **dadurch gekennzeichnet, dass** es umfasst:
0,1 Gew.-% bis 5 Gew.-% Y₂O₃.

3. Optisches Glas nach Anspruch 1, **dadurch gekennzeichnet, dass** es umfasst:
1 Gew.-% bis 10 Gew.-% Gesamtgehalt an BaO, CaO und SrO; und
0,1 Gew.-% bis 1 Gew.-% Gesamtgehalt an Na₂O und K₂O.

4. Optisches Glas nach Anspruch 1, **dadurch gekennzeichnet, dass** es umfasst:
1 Gew.-% bis 7 Gew.-% ZrO₂.

5. Optisches Glas nach Anspruch 1, **dadurch gekennzeichnet, dass** es umfasst:
0,1 Gew.-% bis 5 Gew.-% Yb₂O₃.

6. Optisches Glas nach Anspruch 1, **dadurch gekennzeichnet, dass** es umfasst:
22 Gew.-% bis 32 Gew.-% B₂O₃.

7. Optisches Glas nach Anspruch 1, **dadurch gekennzeichnet, dass** es umfasst:
25 Gew.-% bis 35 Gew.-% La₂O₃.

8. Optisches Glas nach Anspruch 1, **dadurch gekennzeichnet, dass** es umfasst:
18 Gew.-% bis 25 Gew.-% Gd₂O₃.

9. Optisches Glas nach Anspruch 1, **dadurch gekennzeichnet, dass** es umfasst:
2 Gew.-% bis 5 Gew.-% Ta₂O₅.

10. Optisches Glas nach Anspruch 1, **dadurch gekennzeichnet, dass** es umfasst:
0,5 Gew.-% bis 5 Gew.-% Nb₂O₅.

11. Optisches Glas nach Anspruch 1, **dadurch gekennzeichnet, dass** es umfasst:
0,3 Gew.-% bis 1,5 Gew.-% Li₂O.

12. Optisches Element, gebildet aus dem optischen Glas nach einem der vorhergehenden Ansprüche.

## Revendications

1. Verre optique, **caractérisé en ce qu'**il comprend ou est constitué de :
entre 0,1 % en poids et 8 % en poids de SiO₂ ;
entre 20 % en poids et 32 % en poids de B₂O₃ ;
entre 20 % en poids et 35 % en poids de La₂O₃ ;
entre 15 % en poids et 30 % en poids de Gd₂O₃ ;
entre 1 % en poids et 6 % en poids de Ta₂O₅ ;
entre 1 % en poids et 15 % en poids de ZnO ;
entre 0,1 % en poids et 2 % en poids de Li₂O ;
entre zéro et 8 % en poids de ZrO₂ ;
entre zéro et 5 % en poids de Nb₂O₅ ;
entre zéro et 5 % en poids de Y₂O₃ ;
entre zéro et 5 % en poids de Yb₂O₃ ;
entre zéro et 0,5 % en poids de Sb₂O₃ ;
BaO, CaO et SrO, dans lequel une teneur totale en BaO, CaO et SrO est comprise entre 0,5 % en poids et 15 % en poids ; et
Na₂O et K₂O, dans lequel une teneur totale en Na₂O et K₂O est comprise entre 0,1 et 2 % en poids.

2. Verre optique selon la revendication 1, **caractérisé en ce qu'**il comprend :
entre 0,1 % en poids et 5 % en poids de Y₂O₃.

3. Verre optique selon la revendication 1, **caractérisé en ce qu'**il comprend :
entre 1 % en poids et 10 % en poids de BaO, CaO et SrO en teneur totale ; et
entre 0,1 % en poids et 1 % en poids de Na₂O et K₂O en teneur totale.

4. Verre optique selon la revendication 1, **caractérisé en ce qu'**il comprend :
entre 1 % en poids et 7 % en poids de ZrO₂.

5. Verre optique selon la revendication 1, **caractérisé en ce qu'**il comprend :
entre 0,1 % en poids et 5 % en poids de Y₂O₃.

6. Verre optique selon la revendication 1, **caractérisé en ce qu'**il comprend :
entre 22 % en poids et 32 % en poids de B₂O₃.

7. Verre optique selon la revendication 1, **caractérisé en ce qu'**il comprend :
entre 25 % en poids et 35 % en poids de La₂O₃.

8. Verre optique selon la revendication 1, **caractérisé en ce qu'**il comprend :
entre 18 % en poids et 25 % en poids de Gd₂O₃.

9. Verre optique selon la revendication 1, **caractérisé en ce qu'**il comprend :
entre 2 % en poids et 5 % en poids de Ta₂O₅.

10. Verre optique selon la revendication 1, **caractérisé en ce qu'**il comprend :
entre 0,5 % en poids et 5 % en poids de Nb₂O₅.

11. Verre optique selon la revendication 1, **caractérisé en ce qu'**il comprend :
entre 0,3 % en poids et 1,5 % en poids de Li₂O.

12. Élément optique composé du verre optique selon l'une quelconque des revendications précédentes.
